# EUROPEAN PATENT APPLICATION

(11) **EP 4 772 088 A1**
(43) Date of publication of application: **08.07.2026**
(21) Application number: 24887473.7
(22) Date of filing: 23.07.2024
(51) Int. Cl.: A47J 37/06

(54) **PHOTOGRAPHING ASSEMBLY AND FOOD COOKING DEVICE**

(30) Priority: 07.11.2023 CN 202311473326
(71) Applicant: Guangdong Midea Kitchen Appliances Manufacturing Co., Ltd., Foshan, Guangdong 528311 (CN)
(72) Inventor: SHI, Lilong, Foshan, Guangdong 528311 (CN); LU, Shumin, Foshan, Guangdong 528311 (CN); WANG, Ming, Foshan, Guangdong 528311 (CN); ZHONG, Xun, Foshan, Guangdong 528311 (CN); HUANG, Zhifei, Foshan, Guangdong 528311 (CN)
(74) Representative: Ran, Handong
(86) International application number: PCT/CN2024/106996
(87) International publication number: WO 2025/097849

(57) **Abstract**

Provided are a photographing assembly (10) and a food cooking device (100). The photographing assembly (10) is applied to the food cooking device (100), and the food cooking device (100) is provided with a cavity for placing food. The photographing assembly (10) comprises a camera assembly (101), a heat dissipation channel (102) and a fan (103), wherein the camera assembly (101) is located on the cavity and is used for photographing food located in the cavity; one end of the heat dissipation channel (102) is communicated with the camera assembly (101); and the fan (103) is arranged at the other end of the heat dissipation channel (102) and is arranged on a housing of the food cooking device (100), so that the fan (103) suctions air from outside the food cooking device (100), and dissipates heat from the camera assembly (101) by means of the heat dissipation channel (102). On the one hand, the heat dissipation of the camera assembly (101) can be realized, reducing the damage rate of the camera assembly (101), and thus saving the cost; on the other hand, the fan (103) is arranged on the housing of the device, and when the fan (103) is operating, air outside the food cooking device (100) can be used to dissipate heat from the camera assembly (101), which is more convenient.

## Description

### CROSS-REFERENCE TO RELATED APPLICATIONS

This application claims priority to Chinese Patent Application No. 2023114733261, filed on November 07, 2023, in the title of "PHOTOGRAPHING ASSEMBLY AND FOOD COOKING DEVICE", the contents of which are herein incorporated by reference in their entireties.

### TECHNICAL FIELD

The present disclosure relates to the technical field of kitchen appliances, and in particular to a photographing assembly and a food cooking device.

### BACKGROUND

Once cooking is completed, a food cooking device may usually stop operating immediately. However, in a case where the cooking is completed and ended, since a heating source of the food cooking device may have just stopped heating food, an internal cavity of the food cooking device may still maintain a relatively high temperature for a certain period of time. At this time, a fan of the food cooking device may have stopped operating and may be unable to dissipate heat from a camera that is located in the cavity and still at a relatively high temperature, which may cause damage to the camera.

### SUMMARY

Some embodiments of the present disclosure provide a photographing assembly and a food cooking device. On one hand, a heat dissipation for the camera module may be realized, a damage rate of the camera module may be reduced, and costs may be saved. On the other hand, since the fan may be disposed on the housing of the device, an operation of the fan may utilize air outside the food cooking device to dissipate heat from the camera module, which may be convenient.

To address the above problem, a first aspect of the present disclosure provides a photographing assembly. The photographing assembly is disposed on a food cooking device. The food cooking device defines a cavity configured to hold food. The photographing assembly includes a camera module, a heat dissipation channel, and a fan. The camera module is disposed on the cavity and is configured to capture an image of food located in the cavity. One end of the heat dissipation channel is in communication with the camera module. The fan is disposed at another end of the heat dissipation channel on a housing of the food cooking device. The fan is configured to draw air from outside the food cooking device and dissipate heat from the camera module through the heat dissipation channel.

In some embodiments, the photographing assembly may include a camera, a temperature detector, and a controller. The temperature detector may be coupled to the camera. The temperature detector may be configured to detect a temperature of the camera. The controller may be coupled to the camera, the temperature detector, and the fan, respectively. The controller may be configured to generate a control signal based on the temperature of the camera and to control an operation of the fan through the control signal. The controller may be further configured to control the camera to capture the image of the food.

In some embodiments, the food cooking device may include a door. The food may be placed into the cavity through the door. The camera may be disposed adjacent to the door. The camera may form an included angle with the door. The included angle may be an acute angle.

In some embodiments, the fan may be disposed on a side surface of the housing. The side surface of the housing may be disposed opposite to the door.

In some embodiments, the heat dissipation channel may include a first air guide pipe, a second air guide pipe, and a third air guide pipe connected in sequence. A first included angle may be formed between the first air guide pipe and the second air guide pipe. A second included angle may be formed between the second air guide pipe and the third air guide pipe.

In some embodiments, the first included angle may have a value in a range of 0°-90°. The second included angle may have a value in a range of 90°-180°.

In some embodiments, the heat dissipation channel may include an air guide pipe. A shape of the air guide pipe may be substantially arc-shaped.

In some embodiments, the control signal may include an operating time of the fan and a rotational speed of the fan. The controller may be configured to control an operation of the fan based on the operating time and to control a rotation of the fan based on the rotational speed.

To address the above problem, another aspect of the present disclosure provides a food cooking device. The food cooking device includes a housing and a photographing assembly. The housing defines a cavity. The cavity is configured to hold food. The photographing assembly as described in any one of the embodiments above is disposed in the cavity and is configured to capture an image of food located in the cavity.

In some embodiments, the food cooking device may further include a door. One end of the photographing assembly may be adjacent to the door. Another end of the photographing assembly may be adjacent to a side surface of the food cooking device. The side surface may be disposed opposite to the door.

The photographing assembly provided in some embodiments of the present disclosure may be disposed on a food cooking device. The food cooking device may define a cavity configured to hold food. The photographing assembly may include: a camera module, a heat dissipation channel, and a fan. The camera module may be disposed on the cavity and may be configured to capture an image of food located in the cavity. One end of the heat dissipation channel may be in communication with the camera module. The fan may be disposed at another end of the heat dissipation channel on a housing of the food cooking device, so that the fan may be configured to draw air from outside the food cooking device and dissipate heat from the camera module through the heat dissipation channel. In this manner, on one hand, heat dissipation for the camera module may be realized, a damage rate of the camera module may be reduced, and costs may be saved. On the other hand, since the fan may be disposed on the housing of the device, an operation of the fan may utilize air outside the food cooking device to dissipate heat from the camera module, which may be convenient.

### BRIEF DESCRIPTION OF THE DRAWINGS

In order to more clearly illustrate the technical solutions in some embodiments of the present disclosure, a brief introduction will be given below to the drawings required in the description of the embodiments. It is evident that the drawings described below are merely some embodiments of the present disclosure, and those skills in the art may obtain other drawings based on the following drawings without creative work.
FIG. 1 is a schematic view of a photographing assembly according to some embodiments of the present disclosure.
FIG. 2 is a schematic view of a camera module according to some embodiments of the present disclosure.
FIG. 3 is a schematic view of a food cooking device according to some embodiments of the present disclosure.
FIG. 4 is a schematic view of a heat dissipation channel according to some embodiments of the present disclosure.
FIG. 5 is a schematic view of a food cooking device according to some embodiments of the present disclosure.
FIG. 6 is a schematic view of a food cooking device according to some embodiments of the present disclosure.

### Reference numerals in the figures:

| Numerals | Items | Numerals | Items |
|---|---|---|---|
| 10 | Photographing assembly | 100 | Food cooking device |
| 101 | Camera module | 102 | Heat dissipation channel |
| 103 | Fan | 201 | Camera |
| 202 | Temperature detector | 203 | Controller |
| 1001 | Door | A | Cavity |
| X | Included angle | Y | Included angle |
| 401 | First air guide pipe | 402 | Second air guide pipe |
| 403 | Third air guide pipe | Z1 | First included angle |
| Z2 | Second included angle | H | Obstruction |
| 601 | Housing | | |

### DETAILED DESCRIPTION

Some technical solutions in the embodiments of the present disclosure will be clearly and completely described below with reference to the accompanying drawings in the embodiments of the present disclosure. Apparently, the described embodiments may be only some of the embodiments of the present disclosure, rather than all of the embodiments. Based on the embodiments of the present disclosure, all other embodiments that may be obtained by a person skilled in the art without creative efforts may fall within the protection scope of the present disclosure.

It should be noted that, if directional indications (such as upper, lower, left, right, front, rear, etc.) are involved in the embodiments of the present disclosure, such directional indications may be used only to explain the relative positional relationship, movement conditions, etc. among components under a specific posture (as shown in the accompanying drawings). If the specific posture may change, the directional indications may change accordingly.

In addition, if terms such as "first" and "second" are involved in the embodiments of the present disclosure, such descriptions may be used only for descriptive purposes and may not be construed as indicating or implying relative importance or implicitly specifying the number of the indicated technical features. Thus, features defined as "first" or "second" may explicitly or implicitly include at least one such feature. Furthermore, the technical solutions among various embodiments may be combined with each other, provided that such combinations may be achievable by a person skilled in the art. If a combination of technical solutions may result in contradiction or may be unachievable, such a combination may be deemed not to exist and may not fall within the protection scope claimed by the present disclosure.

In related art, once cooking is completed, a food cooking device may usually stop operating immediately. However, in a case where the cooking is completed and ended, since a heating source of the food cooking device may have just stopped heating food, an internal cavity of the food cooking device may still maintain a relatively high temperature for a certain period of time. At this time, a fan of the food cooking device may have stopped operating and may be unable to dissipate heat from a camera that is located in the cavity and still at a relatively high temperature, which may cause damage to the camera.

In view of the above problem existing in food cooking devices, especially built-in food cooking devices, some related art may provide a door air duct on a door of a built-in food cooking device. The door air duct may be in communication with an exhaust device of the built-in food cooking device, so that suction generated by an exhaust fan in the exhaust device during operation may facilitate external cold air to enter the door air duct, thereby cooling the door. However, a cooling effect achieved by such a cooling manner may be limited. There may still be a risk that an excessively high temperature of the door causes burns to a user, and targeted cooling and heat dissipation for the camera may not be achieved.

Based on any one of the above technical problems, some embodiments of the present disclosure provide a photographing assembly, where an additional independent fan is disposed or added, to utilize the independent fan to perform targeted cooling and heat dissipation for a camera.

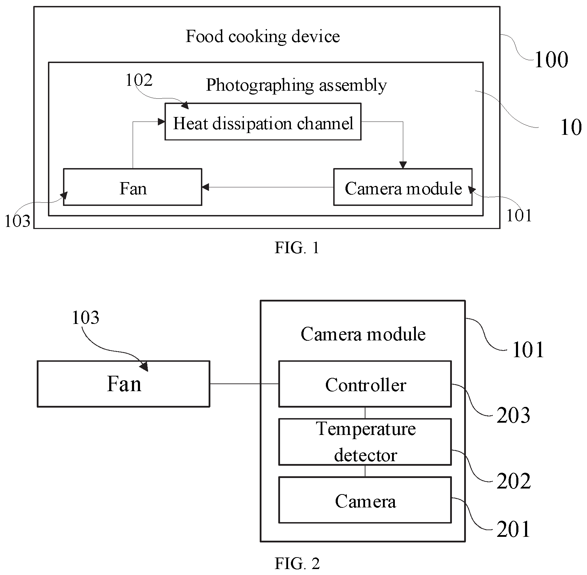

As shown in FIG. 1, FIG. 1 is a schematic view of a photographing assembly according to some embodiments of the present disclosure. The photographing assembly 10 in some embodiments may be disposed on a food cooking device. The food cooking device 100 may define a cavity configured to hold or place or accommodate food.

In some embodiments, the photographing assembly 10 may at least include a camera module 101, a heat dissipation channel 102, and a fan 103. The camera module 101 may be disposed on the cavity. The camera module 101 may be configured to capture an image of food located in the cavity. For example, the camera module 101 may be disposed at an upper portion of the cavity. That is, the camera module 101 may be located above the food in the cavity, so as to capture the image of the food.

One end of the heat dissipation channel 102 may be in communication with the camera module 101. The fan 103 may be disposed at another end of the heat dissipation channel 102 and disposed on a housing of the food cooking device 100, so that the fan 103 may be configured to draw air from outside the food cooking device 100 and to dissipate heat from the camera module 101 through the heat dissipation channel 102.

The fan 103 may be disposed on the housing of the food cooking device 100, which may facilitate the fan 103 to draw air from outside the food cooking device 100. The fan 103 may be in communication with the another end of the heat dissipation channel 102, so that the drawn air may be delivered to the camera module 101 through the heat dissipation channel 102, thereby achieving heat dissipation for the camera module 101.

In some embodiments, the food cooking device 100 may be an air fryer, an oven, or other kitchen appliances, which may not be limited herein.

In some embodiments, the fan 103 may be a centrifugal fan, an axial flow fan, a mixed flow fan, a centrifugal blower, or etc., which may not be limited herein.

The photographing assembly 10 provided in some embodiments of the present disclosure may be disposed on the food cooking device 100. The food cooking device 100 may define a cavity configured to hold food. The photographing assembly 10 may include the camera module 101, the heat dissipation channel 102, and the fan 103. The camera module 101 may be disposed on the cavity and may be configured to capture an image of food located in the cavity. An end of the heat dissipation channel 102 may be in communication with the camera module 101. The fan 103 may be disposed at another end of the heat dissipation channel 102 and disposed on the housing of the food cooking device 100, so that the fan 103 may be configured to draw air from outside the food cooking device 100 and to dissipate heat from the camera module 101 through the heat dissipation channel 102. In this manner, on one hand, heat dissipation for the camera module 101 may be realized, a damage rate of the camera module 101 may be reduced, and costs may be saved. On the other hand, since the fan 103 may be disposed on the housing of the device, an operation of the fan 103 may utilize air outside the food cooking device 100 to dissipate heat from the camera module 101, which may be convenient.

In some embodiments, as shown in FIG. 2, FIG. 2 is a schematic view of a camera module according to some embodiments of the present disclosure. The camera module 101 in some embodiments may include a camera 201, a temperature detector 202, and a controller 203.

The temperature detector 202 may be coupled to the camera 201. The temperature detector 202 may be configured to detect a temperature of the camera 201. The temperature detector 202 may be a temperature probe, a thermometer, or other temperature measuring devices, which is be limited herein.

The controller 203 may be respectively coupled to the camera 201, the temperature detector 202, and the fan 103. The controller 203 may be configured to generate a control signal based on the temperature of the camera 201 and to control an operation of the fan 103 through the control signal, so that the fan 103 may draw air from outside the food cooking device 100. In addition, the controller 203 may further be configured to control the camera 201 to capture an image of food.

The camera module 101 provided in some embodiments of the present disclosure may be configured to dynamically control an operation of the fan 103 based on the temperature of the camera 201. That is, in a case where the temperature of the camera 201 increases or decreases, air volume or other parameters of the fan 103 may accordingly increase or decrease. Through controlling the fan 103 purposefully, waste of electric power resources may be reduced. In addition, dynamically controlling the fan 103 based on the temperature of the camera 201 may improve efficiency of the fan 103.

In some embodiments, the temperature detector 202 may be configured to monitor a real-time temperature of the camera 201 in real time, and to send the real-time temperature of the camera 201 to the controller 203, so that the controller 203 may adjust an operating parameter of the fan 103 in real time and may cause the fan 103 to operate based on an adjusted operating parameter. The operating parameter may at least include operating time and rotational speed.

In some application scenarios, the camera module 101 may integrate the camera 201, a temperature probe, and the controller 203. The temperature probe may be configured to monitor the temperature of the camera 201 in real time and may send an acquired real-time temperature to the controller 203. The controller 203 may be configured to acquire a control signal corresponding to the real-time temperature based on a received real-time temperature and to control an operation of the fan 103 according to a preset rule. The fan 103 may be configured to draw air from outside the food cooking device and to dissipate heat from the camera module 101 through the heat dissipation channel 102. In this way, a closed-loop control may be achieved. That is, in a case where the temperature of the camera 201 is monitored, a sufficient heat dissipation for the camera may be performed, so as to ensure that the camera 201 may operate within a safe temperature range.

In some embodiments, a preset rule may be associated with the control signal. A corresponding instruction may be determined based on the control signal. An operation of the fan 103 may be controlled based on the corresponding instruction. For example, in a case where the instruction corresponding to the control signal specifies operation at a rotational speed of 3 r/s (i.e., three revolutions per second), the fan 103 may be configured to rotate at the rotational speed of 3 r/s. As another example, in a case where the instruction corresponding to the control signal specifies rotation at a frequency of 50 Hz, the fan 103 may be configured to rotate at the frequency of 50 Hz.

In some embodiments, the control signal may include an operating time and a rotational speed of the fan 103. The controller 203 may be configured to control an operation of the fan 103 based on the operating time and may control a rotation of the fan 103 based on the rotational speed.

The operating time and the rotational speed of the fan 103 may be determined according to the temperature of the camera 201 detected by the temperature detector 202. In this case, the fan 103 may be configured to start operating simultaneously when the food cooking device 100 is turned on, or may be configured to start operating when the temperature of the camera 201 detected by the temperature detector 202 exceeds a preset threshold. A value of the preset threshold may be determined through multiple experiments. It should be noted that the preset threshold may be related to a safe operating temperature of the camera 201. In some application scenarios, the preset threshold may be equal to the safe operating temperature.

Alternatively, the operating time and the rotational speed of the fan 103 may further be determined based on parameters such as cooking time and cooking power, etc., for cooking food in the cavity. That is, the operating time and the rotational speed of the fan 103 may be determined through user settings. In this case, the fan 103 may be configured to start operating simultaneously when the food cooking device 100 is turned on, or may be configured to start operating when the temperature of the camera 201 detected by the temperature detector 202 exceeds a preset threshold. A value of the preset threshold may be determined through multiple experiments. It should be noted that the preset threshold may be related to the safe operating temperature of the camera 201. In some application scenarios, the preset threshold may be equal to the safe operating temperature.

In some embodiments, due to different manufacturers, even if products of the same type are manufactured, differences in performance may exist. In this way, a safe temperature range corresponding to the camera 201 in some embodiments of the present disclosure may be determined based on actual conditions. For example, the safe operating temperature range of the camera 201 may be 50°C-60°C. That is, an operating temperature of the camera 201 may be 50°C, 51°C, 52°C, 54°C, 55°C, or 60°C, etc. As another example, the safe operating temperature range of the camera 201 may be 70°C-80°C. That is, the operating temperature of the camera 201 may be 70°C, 71°C, 72°C, 74°C, 75°C, or 80°C, etc.

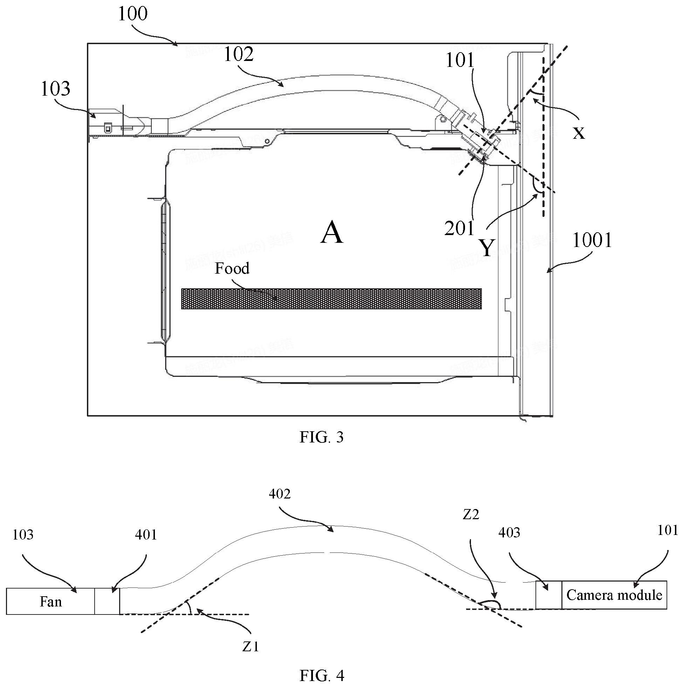

In some embodiments, as shown in FIG. 3, FIG. 3 is a schematic view of a food cooking device 100 according to some embodiments of the present disclosure, specifically a left side view of the food cooking device 100. The food cooking device 100 may include a door 1001. Food may be placed into a cavity A through the door 1001. The camera 201 may be disposed adjacent to the door 1001. The camera 201 may form an included angle X with the door 1001. The included angle X may be an acute angle. That is, the included angle X may be within a range of (0°, 90°), for example, 10°, 15°, 20°, 30°, 45°, 65°, 70°, 80°, etc.

In some application scenarios, the camera 201 may be disposed at an upper portion of the cavity A and may have a certain inclination. The camera 201 may not contact the door 1001. Along an extension direction of the camera 201, the included angle X between the camera 201 and the door 1001 may be 30°. In another application scenario, the camera 201 may be disposed at an upper portion of the cavity A and may have a certain inclination. The camera 201 may not contact the door 1001. Along an extension direction of the camera 201, the included angle X between the camera 201 and the door 1001 may be 60°.

It should be noted that when the camera 201 may be disposed at an upper portion of the cavity A, an inclination of the camera 201 may need to be determined based on a user observation angle. That is, it may be ensured that an image captured by the camera 201 is consistent with food observed by a user through a viewing window on the door 1001 of the food cooking device 100. For example, in a case where the food cooking device 100 is placed at a position far lower than a height of the user, the user may need to bend down to observe, or may observe obliquely downward while standing upright. In a case where the user observes obliquely downward while standing upright, the included angle X between the camera 201 and the door 1001 may approach or approximate to 0°. In a case where the user bends down to observe, the user and the food cooking device 100 may be substantially level in a horizontal direction, and the included angle X between the camera 201 and the door 1001 may approach or approximate to 90°.

In some embodiments, the user may set the inclination of the camera 201 through an operation panel of the food cooking device 100. That is, the included angle X between the camera 201 and the door 1001 may be set. For example, the included angle X may be set to 15°, 30°, 45°, or 65°, etc.

In some embodiments, as shown in FIG. 3, the camera module 101 may be disposed at an upper portion of the cavity A. The camera module 101 may be disposed adjacent to the door 1001. The camera module 101 may form an included angle Y with the door 1001. The included angle Y may be an obtuse angle. That is, the included angle Y may be within a range of (90°, 180°), for example, 95°, 100°, 110°, 120°, 145°, 165°, 170°, etc.

In some application scenarios, the camera module 101 may be disposed at an upper portion of the cavity A and may have a certain inclination. The camera module 101 may not contact the door 1001. Along an extension direction of the camera module 101, the included angle Y between the camera module 101 and the door 1001 may be 120°. In some other application scenarios, the camera module 101 may be disposed at an upper portion of the cavity A and may have a certain inclination. The camera module 101 may not contact the door 1001. Along the extension direction of the camera module 101, the included angle Y between the camera module 101 and the door 1001 may be 60°.

It should be noted that in a case where the camera module 101 may be disposed at an upper portion of the cavity A, an arrangement of the camera module 101 may ensure that an image captured by the camera 201 in the camera module 101 is consistent with food observed by the user through the viewing window on the door 1001 of the food cooking device 100.

In some embodiments, as shown in FIG. 3, an obstruction may exist between the camera module 101 and the fan 103. The obstruction may be any components such as a bottom plate, a motor, or a magnetron, etc., so that a shape of the heat dissipation channel 102 may have a certain curvature and the heat dissipation channel 102 may not directly connect the camera module 101 and the fan 103 in a straight line. In addition, in a case where the camera module 101 is disposed at an upper portion of the cavity A with a certain inclination, the heat dissipation channel 102 may further be unable to directly connect the camera module 101 and the fan 103 in a straight line.

In some other embodiments, without considering a user viewing angle, the camera 201 may be disposed adjacent to the door 1001. The camera 201 may be substantially parallel to the door 1001. That is, the camera 201 may be configured to capture an image of food at an angle substantially perpendicular to the food in the cavity A. In this case, when no obstruction exists between the camera module 101 and the fan 103, a shape of the heat dissipation channel 102 may substantially be a straight passage without any curvature.

In some embodiments, as shown in FIG. 3, the fan 103 may be disposed on a side surface of the housing. The side surface of the housing may be disposed opposite to the door 1001. In some application scenarios, the door 1001 may be disposed on a front surface of the food cooking device 100, and the fan 103 may be disposed on a rear surface of the food cooking device 100.

In some other embodiments, the fan 103 may further be disposed on a right-side wall or a left-side wall of the food cooking device 100. In this case, the right-side wall or the left-side wall may contact the door 1001.

In the photographing assembly 10 provided in some embodiments of the present disclosure, the fan 103 may be configured only to perform cooling and heat dissipation of the camera 201 in the camera module 101. In this case, the fan 103 may be a low-power fan, so that power consumption may be reduced. In addition, to a certain extent, noise generated by a low-power fan during operation may be lower than noise generated by a high-power fan. Thus, in a case where the fan 103 in the photographing assembly 10 is a low-power fan, on one hand, lower power may result in lower resource consumption, so that resources may be saved and costs may be reduced. On the other hand, the relatively low noise may improve user experience.

In some embodiments, as shown in FIG. 4, the heat dissipation channel 102 may include a first air guide pipe 401, a second air guide pipe 402, and a third air guide pipe 403 connected in sequence. The first air guide pipe 401 may be connected to the fan 103. The third air guide pipe 403 may be connected to the camera module 101. A first included angle Z1 may be formed between the first air guide pipe 401 and the second air guide pipe 402. A second included angle Z2 may be formed between the second air guide pipe 402 and the third air guide pipe 403.

In some embodiments, values of the first included angle Z1 and the second included angle Z2 may be determined according to arrangement positions of the camera module 101 and the fan 103. For example, the camera module 101 and the fan 103 may be located on the same horizontal line, and no other obstruction may exist in the heat dissipation channel 102 between them. In this case, the first air guide pipe 401, the second air guide pipe 402, and the third air guide pipe 403 included in the heat dissipation channel 102 may form a "1"-shaped structure, and the first included angle Z1 and the second included angle Z2 may approach or approximate to 0°.

As another example, the camera module 101 and the fan 103 may be located on the same horizontal line, and another obstruction may exist in the heat dissipation channel 102 between them. The obstruction may be a motor or other components. Due to the obstruction, the heat dissipation channel 102 may be unable to be located on the same horizontal line as the camera module 101 and the fan 103. In this case, as shown in FIG. 4, the first air guide pipe 401, the second air guide pipe 402, and the third air guide pipe 403 included in the heat dissipation channel 102 may form an "arch bridge"-shaped structure. The first included angle Z1 may have a value in a range of 0-90°. The second included angle Z2 may have a value in a range of 90-180°.

As another example, the camera module 101 and the fan 103 may not be located on the same horizontal line. Taking a case where the camera module 101 is lower than the fan 103 as an example, the first air guide pipe 401, the second air guide pipe 402, and the third air guide pipe 403 included in the heat dissipation channel 102 may form a "Z"-shaped structure. The first included angle Z1 may have a value in a range of 0-90°. The second included angle Z2 may have a value in a range of 0-90°.

In some embodiments, materials, lengths, and widths, etc. of the first air guide pipe 401, the second air guide pipe 402, and the third air guide pipe 403 may be determined according to actual conditions. For example, a distance between the camera module 101 and a closest obstruction (denoted as a) may be set as a length of the third air guide pipe 403. A distance between the fan 103 and a closest obstruction (denoted as b) may be set as a length of the first air guide pipe 401. A distance between the obstruction a and the obstruction b may be set as a length of the second air guide pipe 402. The obstruction a may be the obstruction closest to the camera module 101 between the camera module 101 and the fan 103. The obstruction b may be the obstruction closest to the fan 103 between the camera module 101 and the fan 103.

In some embodiments, the first air guide pipe 401, the second air guide pipe 402, and the third air guide pipe 403 included in the heat dissipation channel 102 may be integrally formed, and preparation materials of the first air guide pipe 401, the second air guide pipe 402, and the third air guide pipe 403 may be the same. Alternatively, preparation materials of the first air guide pipe 401, the second air guide pipe 402, and the third air guide pipe 403 included in the heat dissipation channel 102 may be different.

In some embodiments, the heat dissipation channel 102 may include an air guide pipe. A shape of the air guide pipe may be substantially arc-shaped. The air guide pipe may be configured to allow air to flow therethrough.

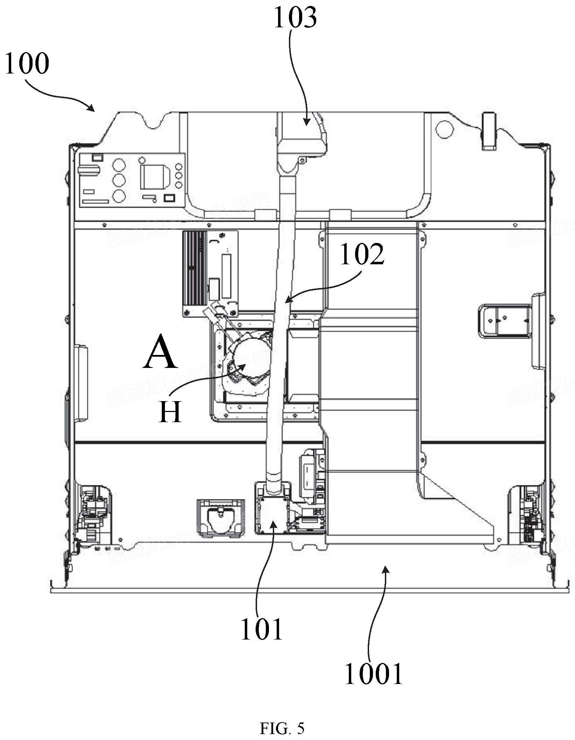

In some embodiments, as shown in FIG. 5, FIG. 5 is a schematic view of a food cooking device 100 according to some embodiments of the present disclosure, specifically a top view of the food cooking device 100. The fan 103 may be disposed at a middle portion of a rear side of the food cooking device 100. The fan 103 may be placed on a fan bottom plate. In space, the camera module 101 may be disposed at an upper portion of the cavity A on a position corresponding to a middle portion of the door 1001. The fan 103 and the camera module 101 may be disposed opposite to each other. The heat dissipation channel 102 between the fan 103 and the camera module 101 may present a "1"-shaped structure in the top view. However, in a side view, the heat dissipation channel 102 may present a "1"-shaped structure, an "arch bridge"-shaped structure, a "Z"-shaped structure, or other structures.

In some embodiments, as shown in FIG. 5, an obstruction H may exist at an upper portion of the cavity A and below the heat dissipation channel 102. The obstruction H may be a motor, a sensor, or other devices.

The photographing assembly 10 provided in some embodiments of the present disclosure may perform heat dissipation for the camera module 101, may reduce a damage rate of the camera module 101, and may thereby save costs. The fan 103 may be disposed on the housing of the appliance. In a case where the fan 103 operates, air outside the food cooking device 100 may be utilized to dissipate heat from the camera module 101, which may be convenient.

In addition, it should be noted that, in addition to the fan 103 in the photographing assembly 10, the food cooking device 100 may further include a fan B (not shown in the drawings; in order to distinguish from the fan 103, the reference sign "B" may be used in description). The fan B may be disposed on the door 1001, on a side surface of the housing, or at another position of the food cooking device 100. In a case where the food cooking device 100 is turned on, the fan B may be configured to start operating. In a case where the food cooking device 100 is turned off, the fan B may be turned off accordingly and synchronously. That is, the fan B may be configured to cool and dissipate heat from the camera 201 when the food cooking device 100 is cooking food held in the cavity A.

In other words, the fan B may be configured to dissipate heat from the camera 201 only in a case where the food cooking device 100 operates. However, after the food cooking device 100 is turned off, a temperature in the cavity A may decrease after a period of time rather than decreasing immediately, and the camera 201 may still be in a high-temperature environment.

In this way, the fan 103 in the photographing assembly 10 provided in some embodiments of the present disclosure may be an independent fan. After cooking of food is completed and ended, the fan 103 may still be configured to dissipate heat from the camera 201 in the camera module 101, so as to solve a problem of excessive temperature of the camera 201. Moreover, in some embodiments of the present disclosure, the independent fan may have low power, low noise, and may be located on a side surface of the housing of the food cooking device 100, which may not only improve user experience, but also save resources and reduce costs.

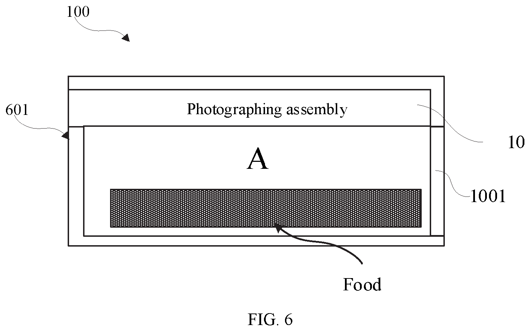

As shown in FIG. 6, FIG. 6 is a schematic view of a food cooking device according to some embodiments of the present disclosure. The food cooking device 100 may include a housing 601 and the photographing assembly 10. The housing 601 may define a cavity A. The cavity A may be configured to hold food. The photographing assembly 10 may be disposed in the cavity A and may be configured to capture an image of food located in the cavity A. The photographing assembly 10 may be the same as or similar to the photographing assembly 10 described in any of the above embodiments, and details may not be repeated herein.

In some embodiments, the food cooking device 100 may further include a door 1001. One end of the photographing assembly 10 may be adjacent to the door 1001, and another end of the photographing assembly 10 may be adjacent to a side surface of the food cooking device 100. The side surface may be disposed opposite to the door 1001.

In some other embodiments, the food cooking device 100 may further include a device such as a sensor, a motor, an operation panel, a steam generator, etc., which may not be described in detail herein.

In the description of the present disclosure, descriptions with reference to terms such as "one embodiment", "some embodiments", "example", "specific example", or "some examples" may indicate that specific features, structures, materials, or characteristics described in connection with the embodiment or example may be included in at least one embodiment or example of the present disclosure. In this specification, schematic expressions of the above terms may not necessarily refer to the same embodiment or example. Moreover, the described specific features, structures, materials, or characteristics may be combined in any one or more embodiments or examples in an appropriate manner. In addition, without mutual contradiction, a skilled person in the art may combine and integrate different embodiments or examples described in this specification and features of different embodiments or examples.

In summary, the photographing assembly 10 provided by some embodiments of the present disclosure may perform heat dissipation for the camera module 101, may reduce a damage rate of the camera module 101, and may thereby save costs. Furthermore, since the fan 103 may be disposed on the housing of the appliance, when the fan 103 operates, air outside the food cooking device 100 may be utilized to dissipate heat from the camera module 101, which may be convenient.

The above may be only embodiments of the present disclosure and may not limit a scope of the present disclosure. Any equivalent structures or equivalent process transformations made by using contents of the specification and the accompanying drawings of the present disclosure, or any direct or indirect application thereof in other related technical fields, may be included within the protection scope of the present disclosure.

## Claims

1. A photographing assembly, disposed on a food cooking device, the food cooking device defining a cavity configured to hold food, and the photographing assembly comprising:
a camera module, disposed on the cavity and configured to capture an image of food located in the cavity;
a heat dissipation channel, one end of the heat dissipation channel being in communication with the camera module; and
a fan, disposed at another end of the heat dissipation channel and on a housing of the food cooking device, and configured to draw air from outside the food cooking device and dissipate heat from the camera module through the heat dissipation channel.

2. The photographing assembly as claimed in claim 1, wherein the camera module comprises:
a camera;
a temperature detector, coupled to the camera, and configured to detect a temperature of the camera; and
a controller, coupled to the camera, the temperature detector, and the fan, respectively, wherein the controller is configured to generate a control signal based on the temperature of the camera and to control an operation of the fan through the control signal, and the controller is further configured to control the camera to capture the image of the food.

3. The photographing assembly as claimed in claim 2, wherein the food cooking device comprises a door, the food is placed into the cavity through the door, the camera is disposed adjacent to the door, the camera forms an included angle with respect to the door, and the included angle is an acute angle.

4. The photographing assembly as claimed in claim 3, wherein the fan is disposed on a side surface of the housing, and the side surface of the housing is disposed opposite to the door.

5. The photographing assembly as claimed in any one of claims 1-4, wherein the heat dissipation channel comprises a first air guide pipe, a second air guide pipe, and a third air guide pipe connected in sequence,
wherein a first included angle is formed between the first air guide pipe and the second air guide pipe, and a second included angle is formed between the second air guide pipe and the third air guide pipe.

6. The photographing assembly as claimed in claim 5, wherein the first included angle has a value in a range of 0°-90°, and the second included angle has a value in a range of 90°-180°.

7. The photographing assembly as claimed in any one of claims 1-4, wherein the heat dissipation channel comprises an air guide pipe that is substantially arc-shaped.

8. The photographing assembly as claimed in claim 2, wherein:
the control signal comprises an operating time of the fan and a rotational speed of the fan;
and
the controller is configured to control an operation of the fan based on the operating time and to control a rotation of the fan based on the rotational speed.

9. A food cooking device, comprising:
a housing, defining a cavity, wherein the cavity is configured to hold food; and
the photographing assembly as claimed in any one of claims 1-8, wherein the photographing assembly is disposed in the cavity and configured to capture an image of food located in the cavity.

10. The food cooking device as claimed in claim 9, further comprising a door,
wherein one end of the photographing assembly is adjacent to the door, another end of the photographing assembly is adjacent to a side surface of the food cooking device, and the side surface is disposed opposite to the door.
